# EUROPEAN PATENT APPLICATION

(11) **EP 3 121 733 A1**
(43) Date of publication of application: **25.01.2017**
(21) Application number: 15805779.4
(22) Date of filing: 08.06.2015
(51) Int. Cl.: G06F 13/14, G06F 3/048

(54) **USER TERMINAL AND CONTROL METHOD THEREFOR**

(30) Priority: 11.06.2014 KR 20140070982
(71) Applicant: Samsung Electronics Co., Ltd, Gyeonggi-do 16677 (KR)
(72) Inventor: PHANG, Joon-ho, Seoul 135-806 (KR); KO, Chang-seog, Hwaseong-si Gyeonggi-do 445-983 (KR); KYOUN, Jae-ki, Yongin-si Gyeonggi-do 446-956 (KR); LEE, Kwan-min, Seoul 135-927 (KR)
(74) Representative: Walaski, Jan Filip
(86) International application number: PCT/KR2015/005718
(87) International publication number: WO 2015/190780

(57) **Abstract**

Provided are a user terminal and a control method therefor. The control method for a user terminal displays multiple relevant images for one image content, displays a first UI for selecting a reproduction time point of the multiple relevant images when a predetermined user interaction is detected, and reproduces the multiple relevant images from a the particular time point when a user interaction selecting the particular time point through the first UI is detected.

## Description

### BACKGROUND OF THE INVENTION

### Field of the Invention

The present disclosure relates to a user terminal and a control method therefor, and more particularly, to a user terminal reproducing image contents which are synchronized with image contents reproduced by an external display device, and a control method therefor.

### Description of the Related Art

In accordance with a development of an electronic technology, various types of display devices have been developed. In particular, the display devices such as a TV, a PC, a laptop computer, a tablet PC, a cell phone, an MP3 player, and the like have a high supply rate to such an extent as to be used in the most houses.

In order to satisfy needs of a user who wants to have newer and various functions, an effort for providing various services and functions through the display device is recently being made. For example, a function of simultaneously providing image contents which are currently displayed by the display device through a user terminal is provided.

However, the user terminal at present merely synchronizes the image contents displayed by the display device with the display device and reproduces the synchronized image contents, but has a limit that it does not provide various services related to the image contents.

### SUMMARY OF THE INVENTION

The present disclosure provides a user terminal capable of providing a user interface (UI) providing various functions and services for image contents received from an external display device, and a control method therefor.

According to an aspect of the present disclosure, a control method for a user terminal includes: displaying multiple relevant images for one image contents; when a preset user interaction is detected, displaying a first user interface (UI) for selecting a reproduction time point of the multiple relevant images; and when a user interaction selecting a specific time point through the first UI is detected, reproducing the multiple relevant images from the specific time point.

The control method may further include: receiving an image stream for the multiple relevant images from an external display device, wherein in the displaying of the multiple relevant images, the image stream may be processed to simultaneously display the multiple relevant images.

In the displaying of the multiple relevant images, the multiple relevant images synchronized with image contents displayed by the display device may be displayed using timestamp information included in the image stream.

The control method may further include: storing the image stream received from the display device, wherein in the reproducing of the multiple relevant images, the multiple relevant images may be reproduced from the specific time point using the stored image stream.

The reproducing of the multiple relevant images may include: transmitting information on the specific time point to an external server; receiving the image stream for the multiple relevant images from the specific time point from the external server; and reproducing the received multiple relevant images from the specific time point.

The control method may further include: when a preset user interaction for one of the multiple relevant images is detected, displaying a second UI for selecting a reproduction time point for one relevant image; and when a user interaction selecting the specific time point through the second UI is detected, reproducing only one relevant image from the specific time point.

The control method may further include: when the preset user interaction for one relevant image is detected while one relevant image is reproduced from the specific time point, expanding one relevant image to be displayed on the entire screen.

The first UI may be an UI of a progress bar form.

According to another aspect of the present disclosure, a user terminal includes: a display configured to display multiple relevant images for one image contents; a sensor configured to detect a user interaction; and a controller configured to control the display so as to display a first user interface (UI) for selecting a reproduction time point of the multiple relevant images when a preset user interaction is detected through the sensor, and to reproduce the multiple relevant images from a specific time point when a user interaction selecting the specific time point through the first UI is detected.

The user terminal may further include: a communicator configured to receive an image stream for the multiple relevant images from an external display device; and an image processor configured to process the received image stream, wherein the controller may control the display so as to simultaneously display the multiple relevant images processed by the image processor.

The controller may control the display so as to display the multiple relevant images synchronized with image contents displayed by the display device using timestamp information included in the image stream.

The user terminal may further include: a storage configured to store the image stream received from the display device, wherein the controller may reproduce the multiple relevant images from the specific time point using the image stream stored in the storage.

The user terminal may further include: a communicator configured to perform communication with an external server, wherein the controller may control the communicator so as to transmit information on the specific time point to the external server and receive an image stream for the multiple relevant images from the specific time point from the external server, and reproduce the received multiple relevant images from the specific time point.

The controller may control the display so as to display a second UI for selecting a reproduction time point of one relevant image when a preset user interaction for one of the multiple relevant images is detected through the sensor, and reproduce only one relevant image from the specific time point when a user interaction selecting the specific time point through the second UI is detected.

The controller may control the display so as to expand one relevant image to be displayed on the entire screen when the preset user interaction for one relevant image is detected through the sensor while one relevant image is reproduced from the specific time point.

The first UI may be an UI of a progress bar form.

According to another aspect of the present disclosure, a control method for a user terminal includes: displaying image contents; when a preset user interaction is detected, displaying a user interface (UI) for selecting a specific section of the image contents; when a user interaction selecting the specific section through the UI is detected, displaying a list providing a plurality of services for the specific section; and when a user interaction selecting one of the plurality of services included in the list is detected, providing a service selected for the specific section.

The list may include at least one of a preview icon providing a preview service, a storage icon providing a storage service, a sharing icon providing a sharing service, and an edit icon providing an edit service.

In the providing of the service, when a user interaction selecting the preview icon is detected, the image contents of the specific section may be reproduced on one area of a display screen.

In the providing of the service, when a user interaction selecting the storage icon is detected, the image contents of the specific section may be stored.

In the providing of the service, when a user interaction selecting the sharing icon is detected, the image contents of the specific section may be uploaded to an external server.

The UI for selecting the specific section may be an UI of a progress bar form mapped to a reproduction time of the image contents, and the control method may further include: when a user interaction selecting a specific time point of the UI of the progress bar form is detected, displaying a thumbnail screen of the specific time point at an upper part of the specific time point.

The image contents may be received from an external display device, and in the displaying of the image contents, the image contents synchronized with image contents reproduced by the display device may be displayed using timestamp information of the image contents.

According to another aspect of the present disclosure, a user terminal includes: a display configured to display image contents; a sensor configured to detect a user interaction; and a controller configured to control the display so as to display a user interface (UI) for selecting a specific section of the image contents when a preset user interaction is detected through the sensor, to control the display so as to display a list providing a plurality of services for the specific section when a user interaction selecting the specific section through the UI is detected, and to provide a service selected for the specific section when a user interaction selecting one of the plurality of services included in the list is detected.

The list may include at least one of a preview icon providing a preview service, a storage icon providing a storage service, a sharing icon providing a sharing service, and an edit icon providing an edit service.

The controller may control the display so as to reproduce the image contents of the specific section on one area of a display screen, when a user interaction selecting the preview icon of a plurality of icons included in the list is detected.

The user terminal may further include a storage, wherein the controller may store the image contents of the specific section in the storage, when a user interaction selecting the storage icon of the plurality of icons included in the list is detected.

The user terminal may further include a communicator configured to perform communication with an external server, wherein the controller may control the communicator so as to upload the image contents of the specific section to the external server, when a user interaction selecting the sharing icon of the plurality of icons included in the list is detected.

The UI for selecting the specific section may be an UI of a progress bar form mapped to a reproduction time of the image contents, and the controller may control the display so as to display a thumbnail screen of a specific time point at an upper part of the specific time point, when a user interaction selecting the specific time point of the UI of the progress bar form is detected.

The image contents may be received from an external display device, and the controller may control the display so as to display the image contents synchronized with image contents reproduced by the display device using timestamp information of the image contents.

### Advantageous Effect

According to the diverse exemplary embodiments of the present disclosure, the user may receive various services and functions for the image contents displayed by the external display device through the user terminal.

### BRIEF DESCRIPTION OF THE DRAWING FIGURES

FIG. 1 is a diagram showing a multimedia system according to an exemplary embodiment of the present disclosure;
FIG. 2 is a block diagram schematically showing a configuration of a user terminal according to an exemplary embodiment of the present disclosure;
FIG. 3 is a block diagram showing the configuration of the user terminal according to an exemplary embodiment of the present disclosure in detail;
FIGS. 4A and 4B, and 5A to 5C are diagrams illustrating a method for pairing a display device and a user terminal according to an exemplary embodiment of the present disclosure;
FIGS. 6A to 6C are diagrams illustrating a method for implementing a network topology according to an exemplary embodiment of the present disclosure;
FIGS. 7A and 7B are diagrams illustrating a method for implementing a network topology according to another exemplary embodiment of the present disclosure;
FIG. 8 is a block diagram illustrating a configuration of a storage according to an exemplary embodiment of the present disclosure;
FIGS. 9A to 10C are diagrams illustrating examples selecting a reproduction time point for at least one of multiple relevant images using an UI for selecting the reproduction time point according to various exemplary embodiments of the present disclosure;
FIGS. 11A to 11G are diagrams illustrating examples providing various functions for a section selected by the user among the image contents according to an exemplary embodiment of the present disclosure;
FIGS. 12A to 12D are diagrams illustrating examples providing a reservation alarm function of a PIP type according to an exemplary embodiment of the present disclosure; and
FIGS. 13 to 15 are flowcharts illustrating a control method for a user terminal according to various exemplary embodiments of the present disclosure.

### DETAILED DESCRIPTION OF THE EXEMPLARY EMBODIMENTS

The present exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope and spirit of the present disclosure. In describing the exemplary embodiments, when it is determined that a specific description of known technologies would obscure the gist of the present disclosure, a detailed description thereof will be omitted.

The terms "first", "second", and the like may be used to describe diverse components, but the components should not limited by the terms. The terms are only used to distinguish one component from the others.

The terms used in the present application are only used to describe the exemplary embodiments, but are not intended to limit the scope of the disclosure. Singular forms used herein are intended to include plural forms unless explicitly indicated otherwise. In the present application, the terms "include" or "consist of" intend to designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented in specific hardware, and may be implemented in at least one processor (not shown).

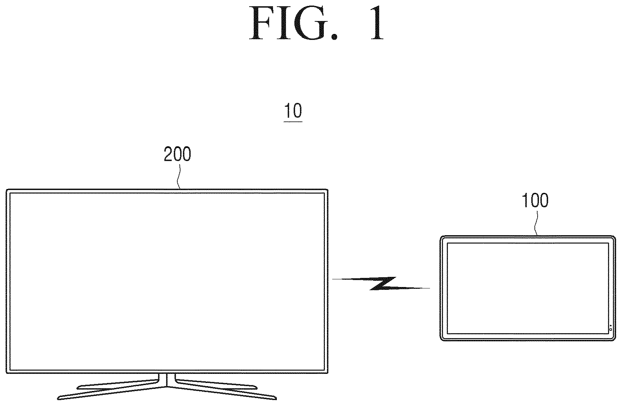

Hereinafter, diverse exemplary embodiments of the present disclosure will be described in detail with reference to the accompanying drawings. FIG. 1 is a diagram showing a multimedia system 10 according to an exemplary embodiment of the present disclosure. As shown in FIG. 1, the multimedia system 10 includes a user terminal 100 and a display device 200. Here, the user terminal 100 may be a separate remote controller including a touch screen for controlling the display device 200, but is merely one example. The user terminal 100 may be implemented as various portable user terminals such as a smartphone, a tablet PC, and the like. In addition, the display device 200 may be a smart TV, but is merely one example. The display device 200 may be implemented as various display devices such as a digital TV, a desktop PC, a notebook PC, navigation, a kiosk, a digital information display (DID), and the like.

The user terminal 100 and the display device 200 may be connected to each other via various communications schemes. For example, the user terminal 100 and the display device 200 may perform communication therebetween using a wireless communication module such as Bluetooth, Wi-Fi, or the like.

In particular, the display device 200 displays image contents. While the display device 200 displays the image contents, the display device 200 may transmit one or more relevant images of the image contents to the user terminal 100. Here, one or more relevant images of the image contents may be an image of the image contents which are currently displayed by the display device 200, a multi-angle image obtained by photographing the image contents at various angles, and an image including relevant information of the image contents.

The user terminal 100 displays one or more relevant images of the image contents. Here, the user terminal 100 may synchronize the image contents displayed by the display device 200 with one or more relevant images based on timestamp information of the image contents and may display the synchronized relevant images. When the image contents are broadcast contents received through the Internet, the user terminal 100 may synchronize the image contents displayed by the display device 200 with one or more relevant images using the timestamp information included in meta data of the broadcast contents and may display the synchronized relevant images.

According to an exemplary embodiment of the present disclosure, the user terminal 100 may store one or more relevant images of the received image contents. Here, the user terminal 100 may store all of one or more relevant images of the image contents, but is merely one example. The user terminal 100 may temporarily store one or more relevant images during a preset section using a first in first out (FIFO) scheme.

When a preset user interaction is detected while the user terminal 100 displays one or more relevant images, the user terminal 100 may display a user interface (UI) (hereinafter, referred to as "an UI for a time shift function") for selecting a reproduction time point of one or more relevant images. Here, the UI for a time shift function may be an UI of a progress bar form. In addition, when a user interaction selecting a specific time point through the UI is detected, the user terminal 100 may reproduce one or more relevant images from the specific time point.

According to an exemplary embodiment of the present disclosure, the user terminal 100 may reproduce an image stream including one or more pre-stored relevant images from the specific time point. According to another exemplary embodiment of the present disclosure, the user terminal 100 may transmit information on the specific time point to an external server, receive the image stream for multiple relevant images from the specific time point from the external server, and display one or more relevant images from the specific time point.

In addition, when the user terminal 100 detects the preset user interaction while displaying the image contents, the user terminal 100 displays an UI for selecting a specific section of the image contents. In addition, when the user interaction selecting the specific section through the UI is detected, the user terminal 100 may display a list providing a plurality of services for the specific section. In addition, when a user interaction selecting one of the plurality of services included in the list is detected, the user terminal 100 provides a service selected for the specific section. Here, the plurality of services for the specific section may include at least one of a storing service of storing image contents of the specific section, a preview service of previewing the image contents of the specific section, a sharing service of sharing the image contents of the specific section with others through a social network service, and an edit service of editing the image contents of the specific section.

In addition, when event image contents are received from the display device 200 while the user terminal 100 displays the image contents, the user terminal 100 displays the event image contents on one area of a display screen. Here, the event image contents may be one of reservation image contents reserved by the user, recommendation image contents, and advertisement image contents.

Using the multimedia system 10 as described above, the user may perform various functions and services for the image contents which are currently displayed by the display device 200 through the user terminal 100.

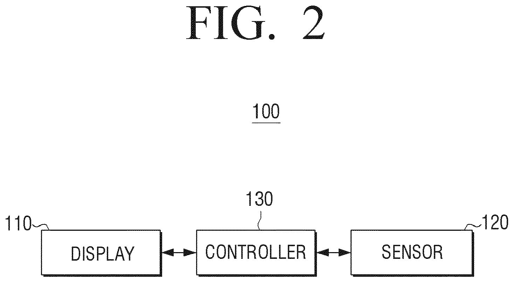

FIG. 2 is a block diagram schematically showing a configuration of a user terminal 100 according to an exemplary embodiment of the present disclosure. As shown in FIG. 2, the user terminal 100 includes a display 110, a sensor 120, and a controller 130.

The display 110 displays the image contents by a control of the controller 130. In particular, the display 110 may partition the display screen and display one or more relevant images for the image contents. Here, the relevant images of the image contents may include at least one of an image of the image contents which are currently displayed by the display device 200, an image obtained by photographing the image contents at various angles, and an image including relevant information of the image contents.

The sensor 120 detects a touch interaction of the user. In particular, the sensor 120 may detect various touch interactions such as a pinch interaction, a drag interaction, and the like. Meanwhile, the sensor 120 may be implemented as a touch screen, together with the display 110.

The controller 130 may control a general operation of the user terminal 100.

According to an exemplary embodiment of the present disclosure, when the sensor 120 detects a preset user interaction while the display 110 displays multiple relevant images for one image contents, the controller 130 may control the display 110 so as to display a first UI for a time shift function. In addition, when the sensor 120 detects a user interaction selecting a specific time point through the first UI, the controller 130 may reproduce the multiple relevant images from the specific time point.

Specifically, when an image stream for the multiple relevant images for one image contents is received from the display device 200, the controller 130 may control the display 110 to process the received image stream and to simultaneously display the multiple relevant images. Here, the controller 130 may control the display 110 so as to display the multiple relevant images synchronized with the image contents displayed by the display device using the timestamp information included in the image stream.

In addition, the controller 130 may store the image stream received from the display device 200. Here, the controller 130 may store the entirety of the received image stream, but is merely one example. The controller 130 may store the received image stream for a preset time using a buffer of an FIFO scheme.

When the sensor 120 detects a preset user interaction (e.g., an interaction touching one area of the touch screen) while the display 110 displays the multiple relevant images, the controller 130 may control the display 110 so as to display the first UI for the time shift function for the multiple relevant images. Here, the first UI may be an UI of a progress bar form, but is merely one example. The first UI may be an UI of different forms.

In addition, when a user interaction selecting the specific time point through the first UI is detected, the controller 130 may reproduce the multiple relevant images from the selected specific time point. Specifically, when any point of the first UI of the progress bar form mapped to a reproduction time of the image contents is touched, the controller 130 may determine a reproduction time point corresponding to the touch point. In addition, the controller 130 may control the display 110 so as to display the multiple relevant images for the image contents from the reproduction time point corresponding to the touch point using the stored image stream. When the image stream received from the display device 200 is not stored, the controller 130 may transmit information on the reproduction time point corresponding to the touch point to the external server. In addition, when the multiple relevant images for the image contents from the reproduction time point corresponding to the touch point are received from the external server, the controller 130 may reproduce the multiple relevant images from the received reproduction time point.

In addition, when the sensor 120 detects a user interaction which is preset for a first relevant image among the multiple relevant images (e.g., an interaction touching one relevant image for a preset time) while the multiple relevant images are displayed, the controller 130 may control the display 110 so as to display a second UI for providing a time shift function for the first relevant image.

In addition, when the sensor 120 detects a user interaction selecting a specific time point through the second UI, the controller 130 may reproduce only the first relevant image from the specific time point. Here, the controller 130 does not reproduce relevant images which are not selected by performing a time shift to the specific time point, but may continuously maintain a current reproduction state.

In addition, when the sensor 120 detects a preset user interaction for the first relevant image (e.g., an interaction continuously touching two times an image in which the first relevant image is displayed) while the first relevant image is reproduced from the specific time point, the controller 130 may control the display 110 so as to expand the first relevant image to be displayed on the entire screen.

Thereby, the user terminal 100 may provide the time shift function to one or more relevant images of the multiple relevant images for one image contents.

Meanwhile, although the exemplary embodiment described above illustrates that the time shift function is provided to all relevant images or one relevant image, the time shift function may be provided to only at least two relevant images of the multiple relevant images. For example, when a preset user interaction for the first relevant image and the second relevant image of the multiple relevant images (e.g., an interaction touching a boundary line between the first relevant image and the second relevant image for a preset time) is detected, the controller 130 may control the display 110 so as to display an UI for providing the time shift function for the first relevant image and the second relevant image.

According to another exemplary embodiment of the present disclosure, when the sensor 120 detects the preset user interaction while the image contents are displayed, the controller 130 may control the display 110 so as to display an UI for selecting a specific section of the image contents. In addition, when the user interaction selecting the specific section through the UI is detected, the controller 130 may control the display 110 so as to display a list providing a plurality of services for the specific section. In addition, when a user interaction selecting one of the plurality of services included in the list is detected, the controller 130 may provide a service selected for the specific section.

Specifically, when an image stream for the image contents which are currently displayed by the display device 200 is received from an external display device 200, the controller 130 may control the display 110 so as to process the received image stream and to display the image contents. Here, the controller 130 may control the display 110 so as to display the image contents synchronized with the image contents reproduced by the display device 200 using the timestamp information of the image contents.

When the user terminal 100 detects the preset user interaction while the user terminal 100 simultaneously displays the image contents which are currently displayed by the display device 200, the controller 130 may control the display 110 so as to display the UI for selecting the specific section of the image contents. Here, the UI for selecting the specific section of the image contents may be an UI of a progress bar form mapped to the reproduction time of the image contents.

In addition, the controller 130 may select the specific section of the image contents according to the user interaction input through the UI. Here, when the user interaction selecting the specific point of the UI of the progress bar form is detected, the controller 130 may control the display 110 so as to display a thumbnail screen displayed at a reproduction time corresponding to the specific point on an upper part of the specific point.

When the user interaction selecting the specific section through the UI is detected, the controller 130 may control the display 110 so as to display the list providing the plurality of services for the specific section. Here, the list may include at least one of a preview icon providing a preview service, a storage icon providing a storage service, a sharing icon providing a sharing service, and an edit icon providing an edit service.

In addition, when a user interaction selecting one of the plurality of services included in the list is detected, the controller 130 may provide a service selected for the specific section. For example, when a user interaction selecting the preview icon of a plurality of icons included in the list is detected, the controller 130 may control the display 110 so as to reproduce the image contents of the specific section on one area of the display screen. As still another example, when a user interaction selecting the storage icon of the plurality of icons included in the list is detected, the controller 130 may store the image contents of the specific section. As still another example, when a user interaction selecting the sharing icon of the plurality of icons included in the list is detected, the controller 130 may upload the image contents of the specific section to the external server.

Thereby, the user may receive various services for the image contents displayed by the display device 200 through the user terminal 100.

Meanwhile, although the exemplary embodiment described above illustrates a case in which various services are provided to one image for the image contents, it is merely one example. Various services may be provided to one or more relevant images of the multiple relevant images for the image contents.

According to another exemplary embodiment of the present disclosure, when event image contents are received from the display device 200 while the user terminal 100 displays the image contents, the controller 130 may control the display 110 so as to display the event image contents on one area of the display screen. Here, the event image contents may be one of reservation image contents reserved by the user, recommendation image contents of a contents provider, and advertisement contents.

In addition, when a user interaction selecting the event image contents displayed on one area of the display screen is detected, the controller 130 may control the display 110 so as to expand the event image contents displayed on one area of the display screen to the entire screen to be displayed.

Here, a preset event may be an event in which a reservation program pre-designated by the user is displayed or an event in which a program recommended by the contents provider is displayed.

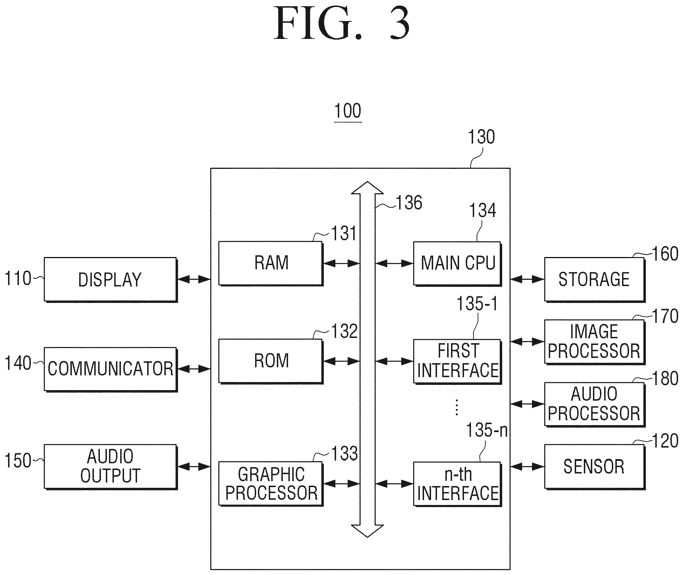

FIG. 3 is a block diagram showing the configuration of the user terminal 100 according to an exemplary embodiment of the present disclosure in detail. As shown in FIG. 3, the user terminal 100 includes the display 110, a communicator 140, an audio output 150, a storage 160, an image processor 170, an audio processor 180, the sensor 120, and the controller 130.

Meanwhile, FIG. 3 generally shows a variety of components as a case in which the user terminal 100 is an apparatus including various functions such as a contents providing function, a display function, a communicating function, and the like, by way of example. Therefore, depending on exemplary embodiments, some of the components shown in FIG. 3 may be omitted or modified, and other components may also be further added.

The display 110 displays at least one of a video frame obtained by processing image data received through the communicator 140 by the image processor 170 and various screens generated by a graphic processor 143. In particular, the display 110 may display a relevant image of one image contents received from the external display device 200. For example, the display 110 may simultaneously display the image contents which are currently displayed by the display device 200, a plurality of angle images obtained by photographing the image contents at various angles, and relevant information on the image contents.

The communicator 120 is a component that performs communication with various types of external devices according to various types of communication schemes. The communicator 120 may include various communicating chips such as a Wi-Fi chip, a Bluetooth chip, an NFC chip, a wireless communication chip, and the like. Here, the Wi-Fi chip, the Bluetooth chip, and the NFC chip perform communications in a Wi-Fi method, a Bluetooth method, and an NFC method, respectively. Among these, the NFC chip means a chip which is operated in the NFC method using a frequency band of 13.56MHz of various RF-ID frequency bands such as 135kHz, 13.56MHz, 433MHz, 860 to 960MHz, 2.45GHz, and the like. In the case in which the Wi-Fi chip or the Bluetooth chip is used, a variety of access information such as SSID, a session key, and the like may be first transmitted and received, a communication access may be performed using the variety of access information, and a variety of information may be then transmitted and received. The wireless communication chip means a chip performing communications according to various communications standards such as IEEE, ZigBee, 3rd generation (3G), 3rd generation partnership project (3GPP), Long Term Evolution (LTE), and the like.

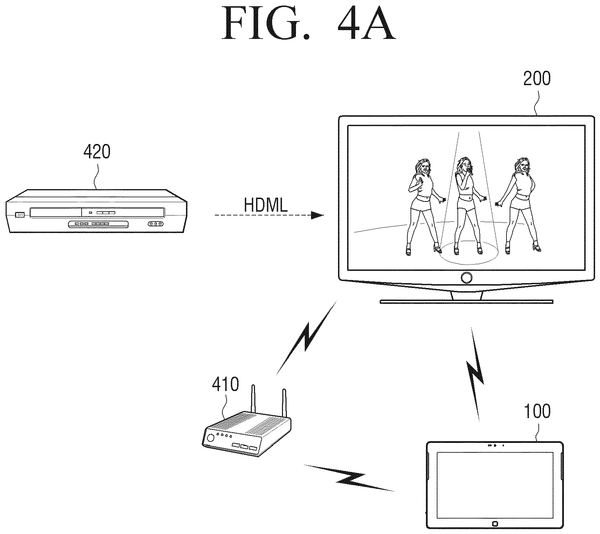

In particular, the communicator 120 may perform a paring with the display device 200 to receive one or more relevant images for the image contents received from the display device 200. Hereinafter, a communication method between the user terminal 100 and the display device 200 will be described in more detail with reference to FIGS. 4A to 7B.

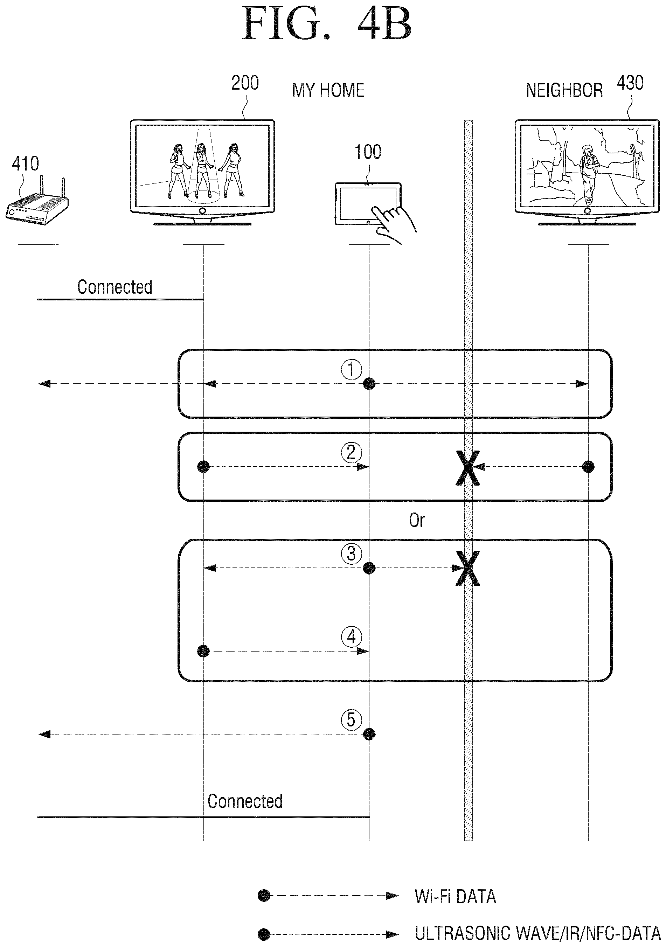

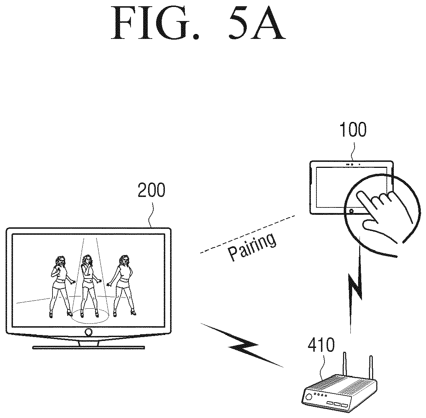

FIGS. 4A and 4B, and 5A to 5C are diagrams illustrating a method for pairing a display device 200 and a user terminal 100 according to an exemplary embodiment of the present disclosure.

As shown in FIG. 4A, the display device 200 and the user terminal 100 may be connected to each other to perform wireless communication via an access point (AP) device 410. For example, the AP device 410 may be implemented as a wireless router transmitting a Wi-Fi signal. However, the display device 200 and the user terminal 100 may also be connected to each other by Wi-Fi direct, which is a new Wi-Fi technology of a P2P concept capable of directly connecting a Wi-Fi terminal without the wireless router, in some cases.

Meanwhile, as shown, a set top box 420 having a home communication terminal function required to use the next-generation bidirectional multimedia communication service (so-called interactive TV) such as video on demand (VOD) contents, an image home shopping, a network game, and the like, may be connected to the display device 200. Here, the set top box, which is an apparatus making the Internet user interface of the TV, also has a web browser as a special computer capable of actually transmitting and receiving data via the Internet and a protocol such as TCP/IP, or the like. The set top box may recently provide a service through a telephone line, a line for a cable TV, or the like for a web TV service, and includes a reception/conversion function of an image signal as a basic function.

As shown in FIG. 4B, the user terminal 100 transmits Wi-Fi data (①) to the display device 200. In this case, the Wi-Fi data may be implemented so that the display device 200 of the same manufacturer recognizes, but a general commercial AP does not recognize and discards. In this case, a need for an H/W chipset change may be decreased by defining a new data type using a Wi-Fi standard format. Accordingly, a chipset manufacturer provides only an API for a new data format, and the new data format is independently defined by the manufacturer, thereby making it possible to be maintained as confidential information. Meanwhile, since the Wi-Fi data is a Wi-Fi signal, it may pass through a wall and may be transmitted to a TV, which is a non-connection target of a neighbor, but the paring may be performed by distinguishing my home and the neighbor.

Thereafter, the display device 200 transmits response data (②) for the Wi-Fi data to the user terminal 100. Specifically, the display device 200 recognizing the Wi-Fi data responds own current AP connection information. In this case, a response of the non-connection target may be limited by an additional technology in which communication is made only in a limited space/distance such as an ultrasonic wave, infrared (IR), or NFC.

Alternatively, as an alternative of ②, data (③) requesting connection information may be transmitted. In this case, current AP connection information of our company's surrounding TV may be requested using the additional technology such as the ultrasonic wave, IR or NFC, immediately after the Wi-Fi data of ①. Here, the display device 200 recognizing the data of ① waits for the requested data of ③, and the connection information request data transmitted by the additional technology in which the communication is made only in the limited space/distance is not transmitted to the non-connection target TV.

Alternatively, as an alternative of ②, response data (④) for the connection information request may be transmitted. Since the AP connection information is transmitted using Wi-Fi, and the connection information request data of ③ is transmitted to only a connection target TV, the display device 200 recognizing the data of ③ responds through general Wi-Fi. However, when the ultrasonic wave is used, since the case of ② needs to use TV SPK, an output range of SPK, or the like is important, and the case of ③+④ may have a limitation that the TV necessarily has a microphone.

Thereafter, AP connection request data (⑤) is transmitted. In this case, since the current AP connection information is acquired from the display device 200, which is the connection target, a connection to a corresponding AP may be requested using the corresponding information.

The paring may be performed by minimizing a user intervention as shown in FIG. 5A according to the paring method as described above. For example, the paring may be performed by only power on. That is, in the case in which the display device 200 is first turned-on, when turning-on the user terminal 100, the user terminal 100 may obtain network (N/W) information within an existing display device 200 without any additional operation and may be connected to the N/W, and may be paired with the display device 200, and vice versa. In addition, the devices which are paired once do not need to be again paired.

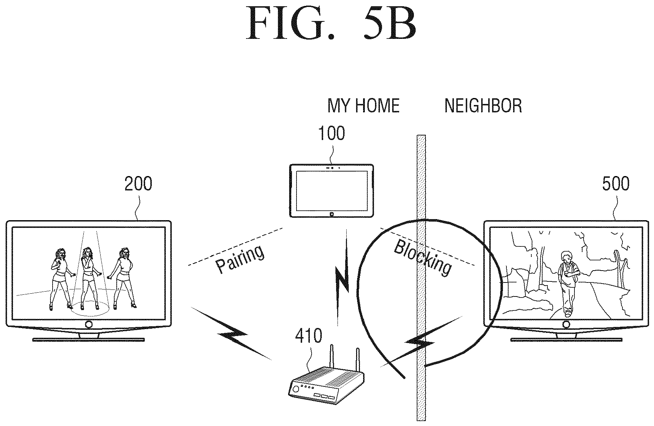

In addition, as shown in FIG. 5B, the paring may be performed by distinguishing the connection target and the non-connection target. For example, a paring non-target device (e.g., the TV of the neighbor) may be identified to be blocked.

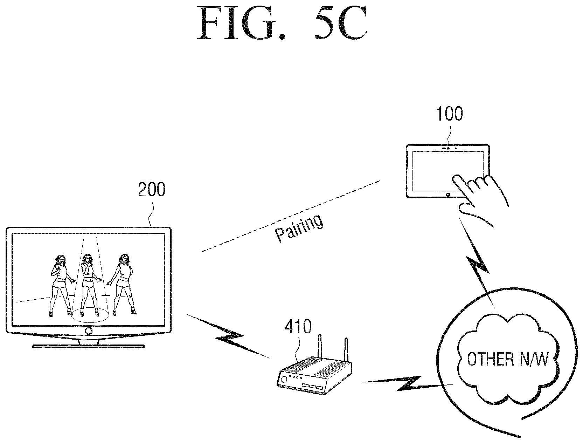

In addition, as shown in FIG. 5C, a limitation on a network environment may be minimized. For example, even in the case in which another network is intervened therebetween, the paring may be performed.

In addition, although not shown in the drawings, a use of an additional local area network technology such as the IR/ultrasonic wave/NFC may also be considered in order to transmit or receive pre-connected network information within a paring target device within the limited space, in some cases.

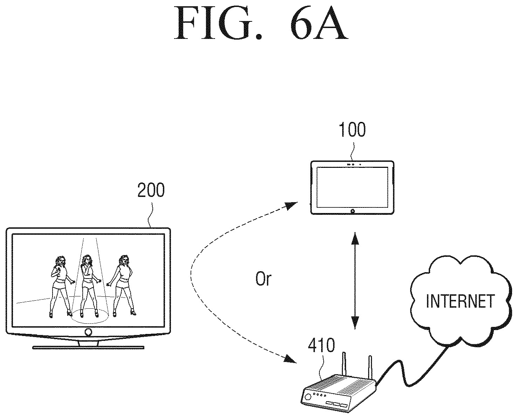

FIGS. 6A to 6C are diagrams illustrating a method for implementing a network topology according to an exemplary embodiment of the present disclosure.

Referring to FIG. 6A, the user terminal 100 may be implemented to be always connectable to the Internet via the AP device 410 or the display device 200. In this case, a connection environment may be determined depending on whether or not there is the display device 200 and the AP device 410, or the Internet connection state. That is, even in any case, the user terminal 100 may be implemented in the Internet connectable form.

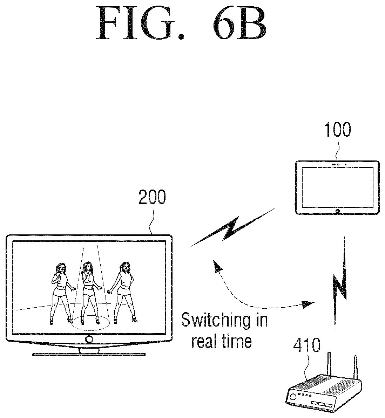

Referring to FIG. 6B, the network topology may be changed in various forms according to a service scenario. For example, when an image is transmitted in real time from the display device 200 to the user terminal 100, the display device 200 and the user terminal 100 may be directly connected to each other in a P2P form. In this case, the change in the network topology rapidly occurs, such that latency according to a service change may not occur.

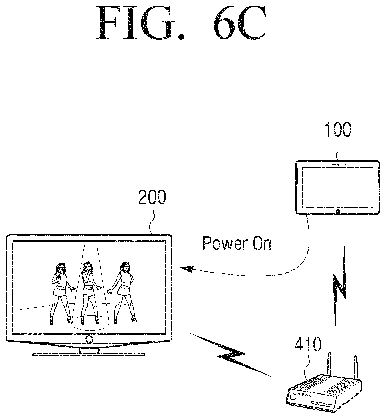

Referring to FIG. 6C, the user terminal 100 may be implemented to be able to control a power on/off using Wi-Fi. For example, the user terminal 100 may need to power on the display device 200 in a power off state using Wi-Fi, and conversely, may need to power off the display device 200 in a power on state using Wi-Fi.

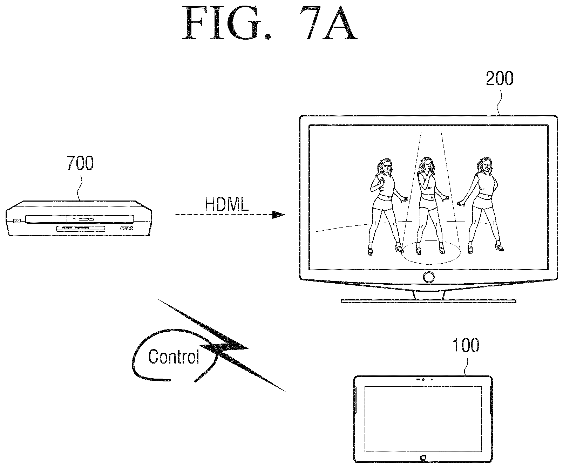

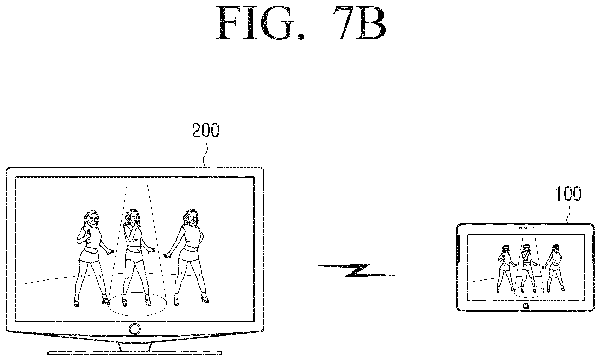

FIGS. 7A and 7B are diagrams illustrating a method for implementing a network topology according to another exemplary embodiment of the present disclosure.

As shown in FIG. 7A, the user terminal 100 may be implemented to remotely control an external device such as STB via a gateway server within the display device 200. In addition, the user terminal 100 may be implemented to control the external device such as the STB by setting an integrated remote-controller without a setup.

As shown in FIG. 7B, the display device 200 and the user terminal 100 may provide various contents streams such as a push view, a drag view, a multi-angle view, and the like.

Referring to again FIG. 3, the audio output 150 is a component that outputs a variety of alarm sounds or voice messages as well as a variety of audio data for which various processing tasks such as decoding, amplification, and noise filtration are performed by the audio processor 180. In particular, when the user terminal 100 displays the multiple relevant images, the audio output 150 may output an audio corresponding to one relevant image selected by the user among the multiple relevant images.

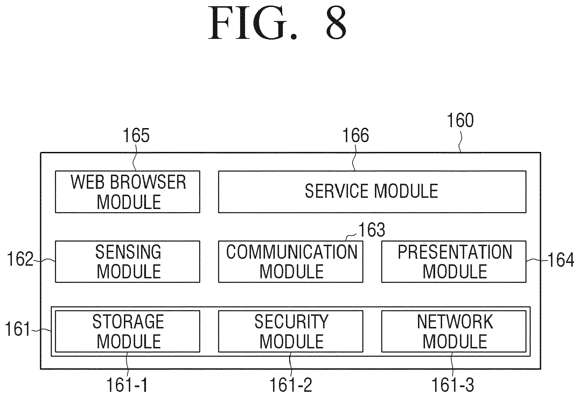

The storage 160 stores various software modules for controlling the user terminal 100. The various software modules stored in the storage 160 will be described with reference to FIG. 8.

As shown in FIG. 8, the storage 160 may store software including a base module 161, a sensing module 162, a communication module 163, a presentation module 164, a web browser module 165, and a service module 166.

The base module 161 means a basic module processing signals transferred from the respective hardware included in the user terminal 100 and transferring the processed signals to a high layer module. The base module 161 includes a storage module 161-1, a security module 161-2, a network module 161-3, and the like. The storage module 161-1 is a program module managing a database (DB) or a registry. The main CPU 134 may access a database in the storage 160 using the storage module 161-1 to thereby read a variety of data. The security module 161-2 is a program module supporting certification, request permission, secure storage, and the like for hardware, and the network module 161-3, which is a module supporting a network connection, includes a DNET module, an UPnP module, and the like.

The sensing module 162 is a module collecting information from a variety of sensors, and analyzing and managing the collected information. The sensing module 162 may also include a touch recognition module, a head direction recognition module, a face recognition module, a voice recognition module, a motion recognition module, an NFC recognition module, and the like.

The communication module 163 is a module for performing communication with the outside. The communication module 163 may include a device module used for communication with an external device, a messaging module such as a messenger program, a short message service (SMS) & multimedia message service (MMS) program, an e-mail program, or the like, and a call module including a call info aggregator program module, a VoIP module, and the like.

The presentation module 164 is a module for configuring a display screen. The presentation module 164 includes a multimedia module for reproducing and outputting multimedia contents and an UI rendering module performing an UI and graphic processing. The multimedia module may include a player module, a camcorder module, a sound processing module, and the like. Therefore, the multimedia module reproduces a variety of multimedia contents to perform an operation generating and reproducing the screen and the sound. The UI rendering module may include an image compositor module combining images, a coordinate combining module combining and generating coordinates on the screen on which the image is to be displayed, an X11 module receiving a variety of events from hardware, a 2D/3D UI toolkit providing a tool for configuring a 2D or 3D type of UI, and the like.

The web browser module 165 means a module performing a web browsing to access a web server. The web browser module 165 may include various modules such as a web view module configuring a web page, a download agent module performing a download, a bookmark module, a webkit module, and the like.

The service module 166 is a module including a variety of applications for providing various services. Specifically, he service module 166 may include various program modules such as an SNS program, a contents reproduction program, a game program, an e-book program, a calendar program, an alarm management program, and other widgets.

In addition, the storage 160 may include a buffer in which the relevant image of the image contents is transiently stored so that the user terminal 100 and the display device 200 may be synchronized with each other to reproduce the image contents. The relevant image stored in the buffer may be output to the display 110 according to the timestamp information of the image contents.

The image processor 170 is a component that performs a processing for the image stream including the image contents received through the communicator 140. The image processor 170 may perform various image processes such as decoding, demultiplexing, scaling, noise filtration, frame rate conversion, resolution conversion, and the like for the image stream.

The audio processor 180 is a component that performs a processing for audio data of the image contents. The audio processor 180 may perform various processes such as decoding, amplification, noise filtration, and the like for the audio data. The audio data processed by the audio processor 180 may be output to the audio output 150.

The sensor 130 may detect various user interactions for controlling a configuration of the user terminal 100. In particular, the sensor 130 may be implemented as a touch sensor for detecting a touch interaction of the user. Here, the touch sensor may be disposed on a rear surface of the display 110 to be implemented as a touch screen.

The controller 130 may control a general operation of the user terminal 100 using a variety of programs stored in the storage 160.

As shown in FIG. 3, the controller 130 includes a random access memory (RAM) 131, a read only memory (ROM) 132, a graphic processor 133, a main central processing unit (CPU) 134, first to n-th interfaces 135-1 to 135-n, and a bus 136. Here, the RAM 131, the ROM 132, the graphic processor 133, the main CPU 134, the first to n-th interfaces 135-1 to 135-n, and the like may be connected to each other through the bus 136.

The ROM 132 stores a set of instructions for booting a system. When turn-on instruction is input to supply power to the main CPU 134, the main CPU 134 copies an operating system (O/S) stored in the storage 160 to the RAM 131 according to the instructions stored in the ROM 132, and executes the O/S to boot the system. When the booting of the system is completed, the main CPU 134 copies a variety of application programs stored in the storage 160 to the RAM 131, and executes the application programs copied to the RAM 131 to perform a variety of operations.

The graphic processor 133 generates a screen including various objects such as a pointer, an icon, an image, a text, and the like using a calculator (not shown) and a renderer (not shown). The calculator calculates attribute values such as coordinate values, shapes, sizes, colors, and the like in which the respective objects are to be displayed, according to a layout of the screen using a control instruction received from the input. The renderer generates the screen of various layouts including the objects based on the attribute values calculated by the calculator. The screen generated by the renderer is displayed in a display region of the display 110.

The main CPU 134 accesses the storage 160, and performs the booting using the O/S stored in the storage 160. In addition, the main CPU 134 performs various operations using a variety of programs, contents, data, and the like stored in the storage 160.

The first to n-th interfaces 135-1 to 135-n are connected to the variety of components described above. One of the interfaces may be a network interface connected to an external device over a network.

In particular, the controller 130 may control the communicator 140 so as to receive the image stream for the multiple relevant images of the image contents which are currently displayed by the display device 200 from the external display device 200. Here, the image stream may include meta-data of the image contents, as well as data for the multiple relevant images of the image contents.

In particular, when the image contents are broadcast contents, the controller 130 may control the communicator 140 so as to receive an image stream for multiple relevant images of the broadcast contents which are currently displayed by the display device 200. Here, the multiple relevant images may be multiple angle images obtained by photographing the image contents at various angles. For example, when the display device 200 currently displays a first angle image photographed at a first view point, the controller 130 may control the communicator 140 so as to receive an image stream including a second angle image to a fifth angle image which are photographed at view points which are different from the first view point.

In addition, the controller 130 may store the received image stream in the storage 160. Here, the controller 130 may store the entirety of the received image streams, but is merely one example. The controller 130 may transiently store the received image stream in a buffer of an FIFO scheme. For example, the controller 130 may transiently store the received image stream in the buffer for 90 seconds.

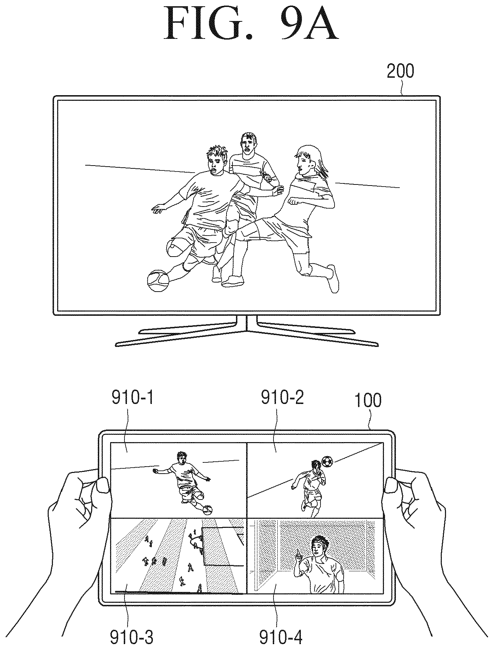

In addition, the controller 130 may control the image processor 170 so as to process the received image stream to generate the multiple relevant images, and may control the display 110 so as to display the multiple generated relevant images. For example, when the display device 200 displays the first angle image photographed at the first view point, the controller 130 may control the display 110 so as to quadrisect the display screen to display the second angle image to the fifth angle image 910-1 to 910-4 which are photographed at the view points which are different from the first view point, as shown in FIG. 9A.

Here, the controller 130 may control the display 110 so as to display the multiple relevant images synchronized with the image displayed by the display device 200 using the timestamp information included in the meta data of the image stream.

When a preset user interaction is detected while the multiple relevant images are displayed, the controller 130 may control the display 110 so as to display an UI for providing a time shift function.

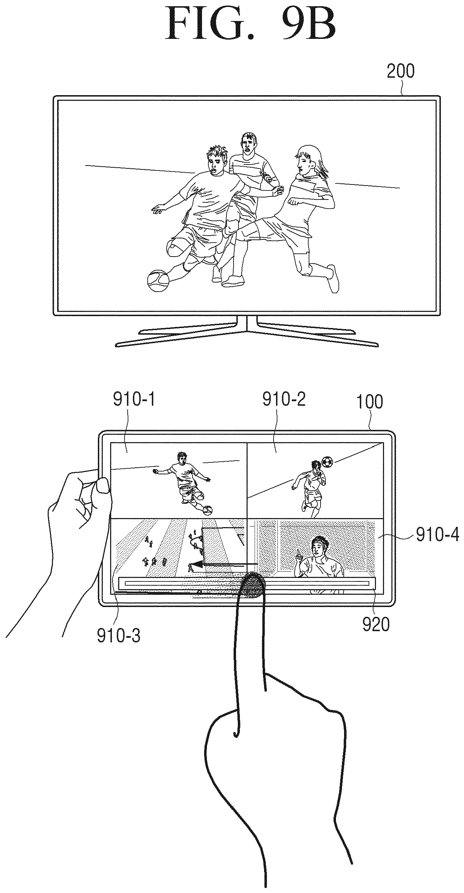

Specifically, as shown in FIG. 9A, when a user interaction touching the display 110 (i.e., a touch screen) is detected while the second angle image to the fifth angle image 910-1 to 910-4 are displayed, the controller 130 may control the display 110 so as to display an UI 920 of a progress bar form on a lower part of the display screen, as shown in FIG. 9B. Here, the UI 920 of the progress bar form may be mapped to a reproduction time of the image contents.

In addition, when a user interaction selecting a specific time point through the UI is detected, the controller 130 may reproduce the multiple relevant images from the specific time point.

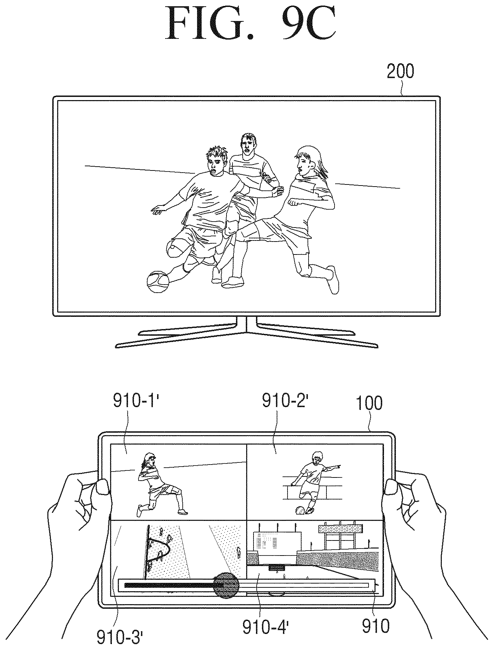

Specifically, as shown in FIG. 9B, when a user interaction touching a first point of the UI 920 and then performing a drag to a second point is detected, the controller 130 may determine a reproduction time point t1 corresponding to the second point. In addition, as shown in FIG. 9C, the controller 130 may time-shift and reproduce a second angle image to a fifth angle image 910-1' to 910-4' from the determined reproduction time point t1.

In particular, the controller 130 may control the display 110 so as to display the multiple relevant images from the reproduction time point t1 using the image stream stored in the storage 160. Meanwhile, in the case in which the image stream is not stored in the storage 160, the controller 130 may control the communicator 140 so as to transmit information on the image contents and information on the reproduction time point t1 to an external server. When the external server transmits the multiple relevant images for the image contents after the reproduction time point t1 based on the information on the image contents and the information on the reproduction time point t1, the controller 130 may control the display 110 so as to display the multiple relevant images for the transmitted image contents.

Meanwhile, the controller 130 may provide the time shift function for one relevant image of the multiple relevant images.

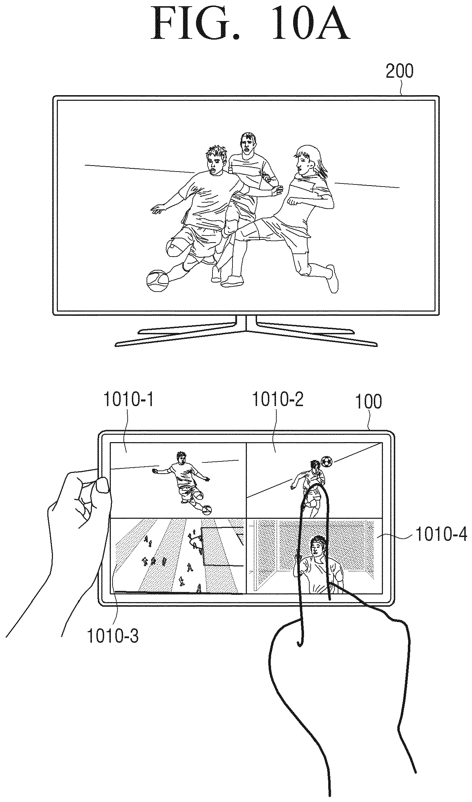

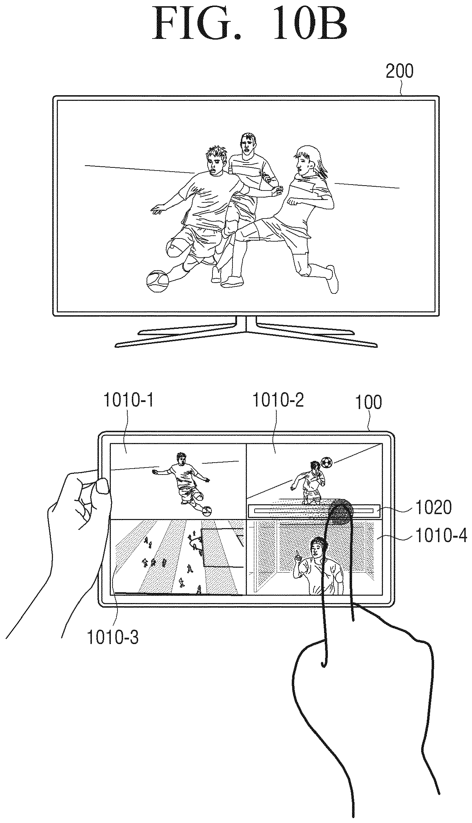

Specifically, as shown in FIG. 10A, when a user interaction touching an area in which a third angle image 1010-2 is displayed is detected while a second angle image to a fifth angle image 1010-1 to 1010-4 are displayed, the controller 130 may control the display 110 so as to display an UI 1020 of a progress bar form on a lower part of the third angle image, as shown in FIG. 10B. Here, the UI 1020 of the progress bar form may be mapped to a reproduction time of the third angle image 1010-2.

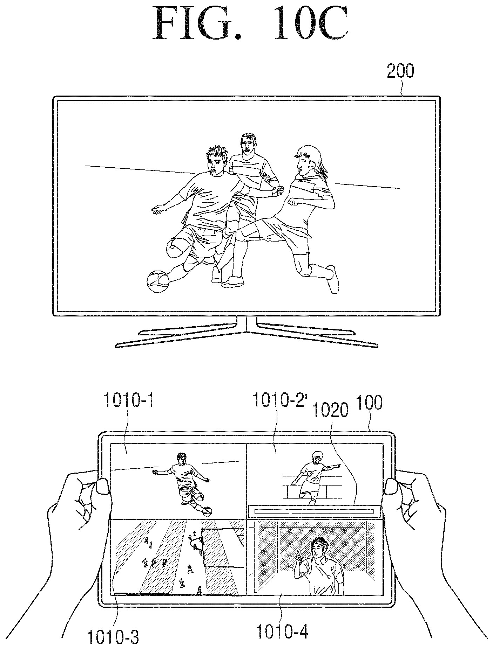

In addition, as shown in FIG. 10B, when a user interaction touching a first point of the UI 1020 and then performing a drag to a second point is detected, the controller 130 may determine a reproduction time point t2 corresponding to the second point. In addition, as shown in FIG. 10C, the controller 130 may time-shift and reproduce a third angle image 1010-2' from the determined reproduction time point t2. Here, as shown in FIG. 10C, the controller 130 may maintain reproduction states of the second angle image 1010-1, the fourth angle image 1010-3, and the fifth angle image 1010-4.

In addition, when a preset user interaction for the third angle image 1010-2' (e.g., a user interaction continuously touching an area at which the third angle image 1010-2' is touched) is detected after the third angle image 1010-2' is time-shifted, the controller 130 may control the display 110 so as to expand the third angle image 1010-2' to the entire screen to be displayed.

As described above, by providing the time shift function to the multiple relevant images for one image contents, the user may more instinctively confirm a previous screen or a future screen of the relevant images of the image contents without being disturbed a viewing of the image contents displayed by the display device 200.

According to another exemplary embodiment of the present disclosure, the controller 130 may control the communicator 140 so as to receive the image stream for the image contents from the external display device 200. Here, the image stream may include meta-data of the image contents, as well as data for the image contents.

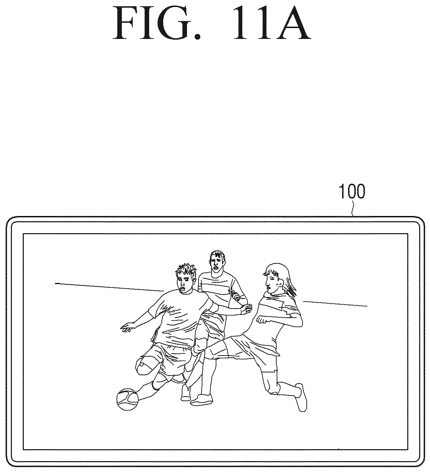

In addition, the controller 130 may control the image processor 170 so as to process the received image stream to generate the image contents, and may control the display 110 so as to display the generated image contents, as shown in FIG. 11A. Here, the controller 130 may control the display 110 so as to display the image contents synchronized with the image contents which are currently displayed by the display device 200 using the timestamp information included in the meta-data of the image stream.

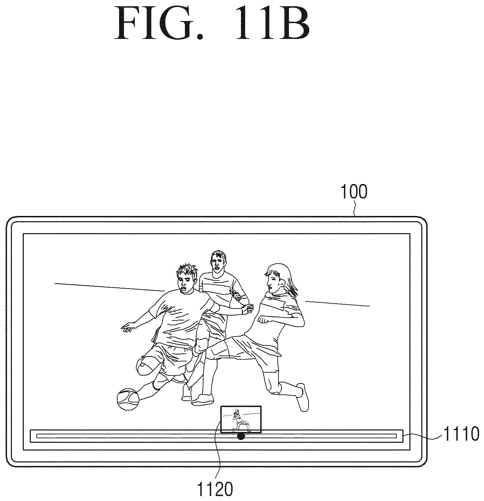

When a user interaction touching the display 110 (i.e., a touch screen) is detected while the image contents are displayed, the controller 130 may control the display 110 so as to display an UI 1110 of a progress bar form for selecting a specific section of the image contents, as shown in FIG. 11B. Here, the UI 1110 of the progress bar form may be mapped to a reproduction time of the image contents.

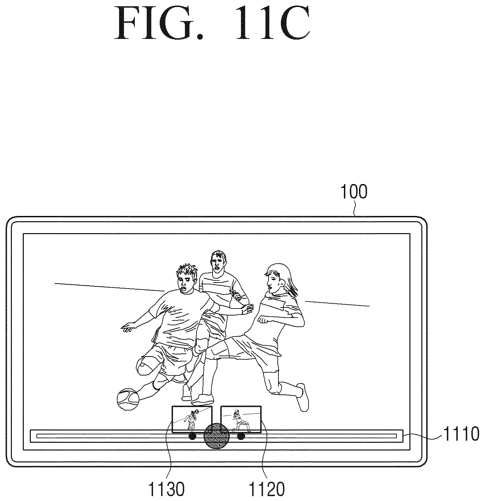

In addition, when a first point of the progress bar is touched, the controller 130 may control the display 110 so as to display a first thumbnail image 1120 displayed at a reproduction time t3 corresponding to the first point on an upper part of the first point, as shown in FIG. 11B. In addition, when a second point of the progress bar is touched, the controller 130 may control the display 110 so as to display a second thumbnail image 1130 displayed at a reproduction time t4 corresponding to the second point on an upper part of the second point, as shown in FIG. 11C.

In addition, when the first point and the second point are selected, the controller 130 may set a clip section by setting the reproduction time t4 corresponding to the second point as a start time, and setting the reproduction time t3 corresponding to the first point as a final time.

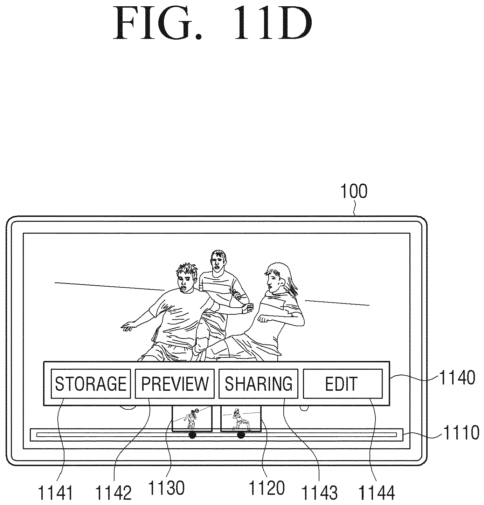

In addition, when the clip section is set, the controller 130 may control the display 110 so as to display a list 1140 providing various services for the clip section on upper parts of the first thumbnail image 1120 and the second thumbnail image 1130, as shown in FIG. 11D. Here, the list 1140 may include a storage icon 1141 providing a storage service, a preview icon 1142 providing a preview, a sharing icon 1143 providing a sharing service, and an edit icon 1144 providing an edit service.

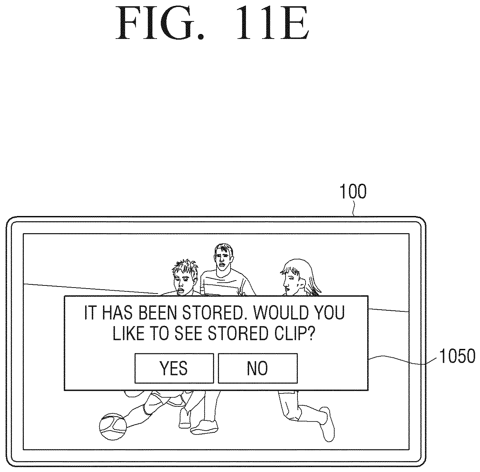

When a user interaction selecting the storage icon 1141 among a plurality of icons 1141 to 1144 is detected, the controller 130 may control the display 110 so as to store the clip section in the storage 160 and to display a guide message 1150 "It has been stored. Would you like to see stored clip?", as shown in FIG. 11E.

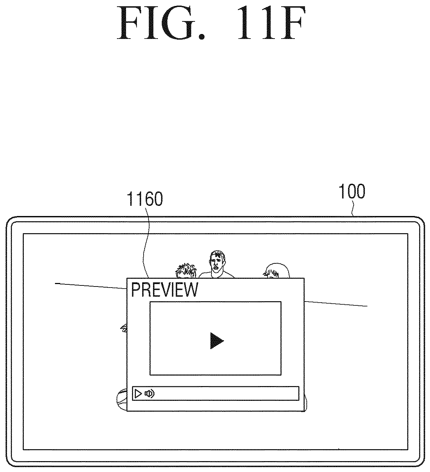

When a user interaction selecting the preview icon 1142 among the plurality of icons 1141 to 1144 is detected, the controller 130 may control the display 110 so as to display a window 1160 for the preview on one area of the display screen, as shown in FIG. 11F. When a preview instruction is input through the window 1160, the controller 130 may reproduce the image contents of the clip section through the window 1160.

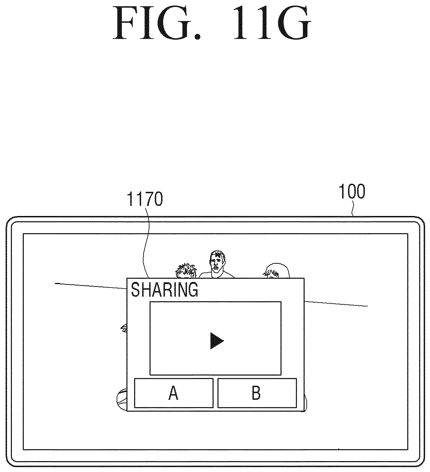

When a user interaction selecting the sharing icon 1143 among the plurality of icons 1141 to 1144 is detected, the controller 130 may control the display 110 so as to display a sharing window 1170 for sharing the clip section, as shown in FIG. 11G. When one of a plurality of SNS services included in the sharing window 1170 is selected, the controller 130 may control the communicator 140 so as to transmit the image contents of the clip section to a server corresponding to the selected SNS service. For example, when "A" of the plurality of SNS services included in the sharing window 1170 is selected, the controller 130 may control the communicator 140 so as to transmit the image contents of the clip section to a server corresponding to the "A".

When a user interaction selecting the edit icon 1144 among the plurality of icons 1141 to 1144 is detected, the controller 130 may control the display 110 so as to display an edit window for editing the clip section.

According to the exemplary embodiments described above, the user may receive various services for the selected specific section of the image contents without being disturbed the viewing of the image contents displayed by the display device 200.

According to another exemplary embodiment of the present disclosure, the controller 130 may control the communicator 140 so as to receive the image stream for the image contents from the external display device 200. Here, the image stream may include meta-data of the image contents, as well as data for the image contents.

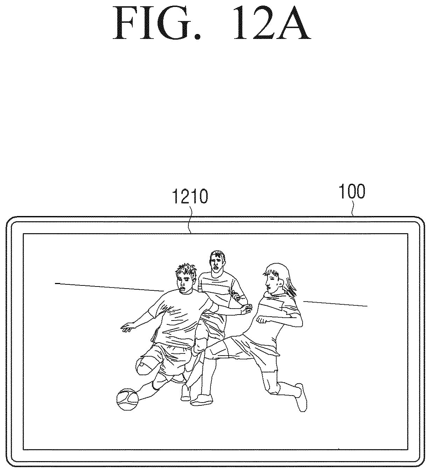

In addition, the controller 130 may control the image processor 170 so as to process the received image stream to generate the image contents, and may control the display 110 so as to display the generated image contents 1210, as shown in FIG. 12A. Here, the controller 130 may control the display 110 so as to display the image contents synchronized with the image contents which are currently displayed by the display device 200 using the timestamp information included in the meta-data of the image stream.

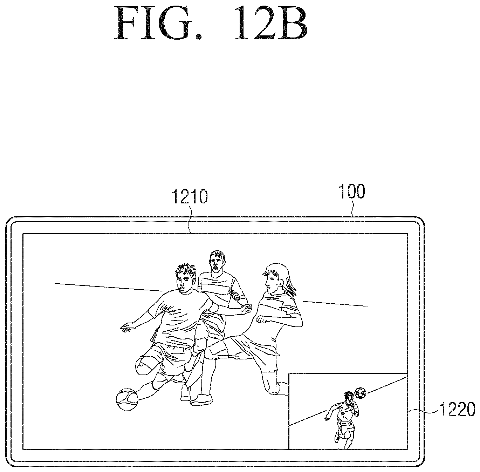

When preset event image contents are received from the display device 200 while the image contents are displayed, the controller 130 may control the display 110 so as to display the received event image contents 1220 in a PIP form at a lower right part of the display screen, as shown in FIG. 12B. Here, the event image contents 1220 may be reservation image contents reserved by the user, recommendation image contents recommended by a contents provider, and advertisement image contents. Here, an advertisement target of the advertisement image contents may be a product included in a screen which is currently displayed by the image contents. In addition, the event image contents may be transmitted as a separate image stream, but is merely one example. The event image contents may be multiplexed with existing image contents to thereby be transmitted.

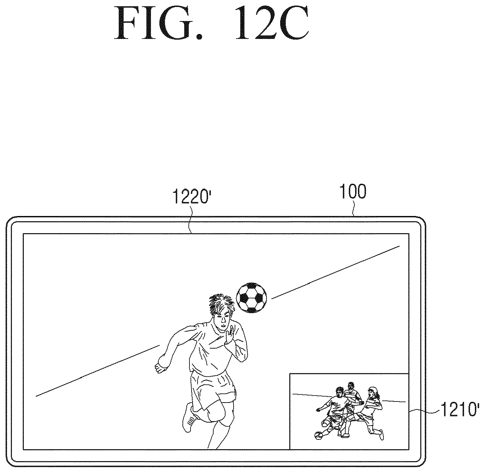

In addition, as shown in FIG. 12B, when a user interaction continuously touching an area in which the event image contents are displayed is detected while the event image contents are displayed in the PIP form at the lower right part of the display screen, as shown in 12B, the controller 130 may control the display 110 so as to expand the event image contents 1220' to the entire screen to be displayed, and to display the existing image contents 1210' on a PIP screen, as shown in FIG. 12C.

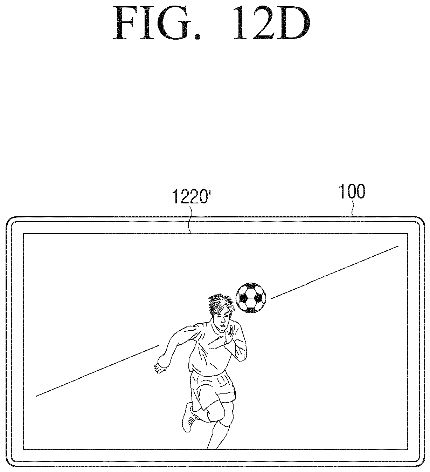

In addition, as shown in FIG. 12C, when the user interaction is not detected for a preset time while the event image contents 1220' and the image contents 1210' are displayed, as shown in FIG. 12C, the controller 130 may control the display 110 so as to remove the image contents 1210' displayed on the PIP screen and to display the event image contents 1220', as shown in FIG. 12D.

When a user interaction touching an area in which the image contents 1210' are displayed is detected while the event image contents 1220' and the image contents 1210' are displayed, as shown in FIG. 12C, the controller 130 may control the display 110 so as to again display the image contents 1210 on the entire screen and to display the event image contents 1220 on the PIP screen, as shown in FIG. 12B.

By providing the event image contents to the PIP screen as described above, the user may confirm various event images without being disturbed the viewing of the image contents reproduced by the display device 200.

Meanwhile, although the exemplary embodiment described above illustrates the case in which the event image contents are received from the display device 200, it is merely one example. The event image contents may be pre-stored in the user terminal 100, and may also be received from the external server.

Meanwhile, although the exemplary embodiment described above illustrates the case in which the image contents or the relevant images of the image contents are received from the display device 200, it is merely one example. The image contents or the relevant images of the image contents may be received through the Internet. In this case, the user terminal 100 may display the image contents or the relevant images of the image contents synchronized with the image contents which are currently displayed by the display device 200 using the timestamp information stored in the external server (particularly, a cloud server).

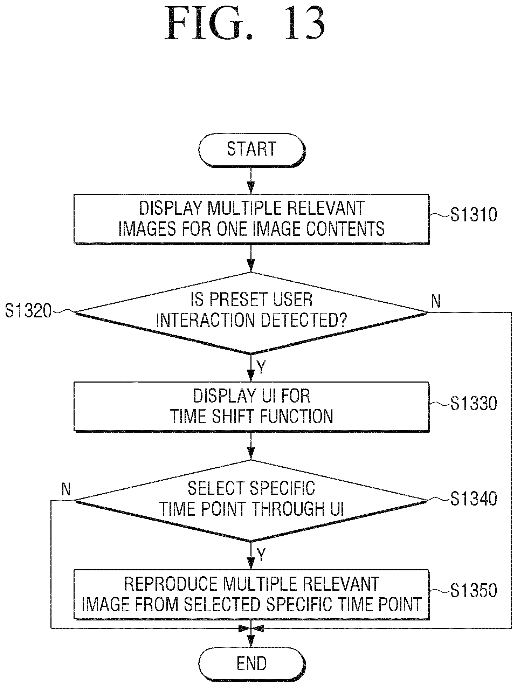

Hereinafter, the present disclosure will be described in more detail with reference with FIGS. 13 to 15. FIG. 13 is a flowchart illustrating an example providing a time shift function according to an exemplary embodiment of the present disclosure.

First, the user terminal 100 displays multiple relevant images for one image contents (S1310). Here, the multiple relevant images may be received from the display device 200, and may be displayed to be synchronized with one image contents displayed by the display device 200.

In addition, the user terminal 100 determines whether or not a preset user interaction is detected (S1320).

If the preset user interaction is detected (Yes in S1320), the user terminal 100 displays an UI for a time shift function (S1330). Here, the UI for the time shift function may be an UI of a progress bar form mapped to a reproduction time of the image contents.

In addition, the user terminal 100 determines whether or not a specific time point is selected through the UI (S1340).

If the specific time point is selected (Yes in S1340), the user terminal 100 reproduces the multiple relevant images from the selected specific time point (S1350). Here, the user terminal 100 may reproduce the multiple relevant images from the specific time point using a pre-stored image stream or an image stream received from an external server.

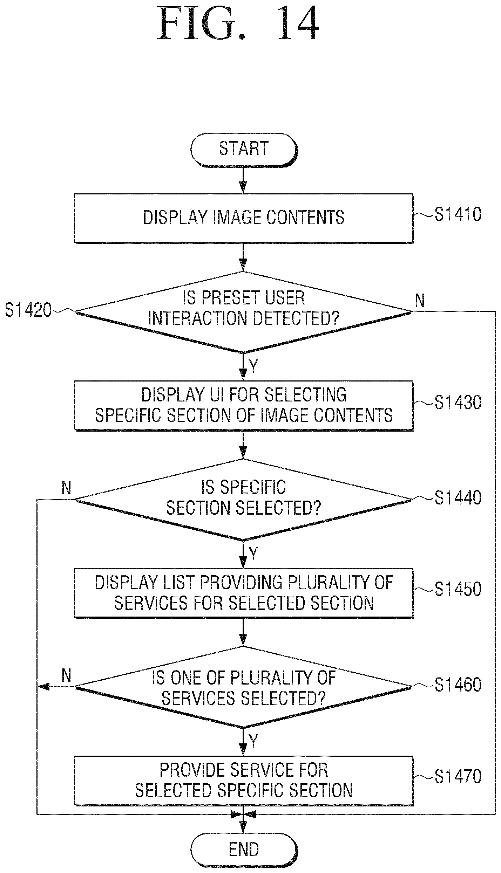

FIG. 14 is a flowchart illustrating an example providing various services for a specific section of the image contents according to an exemplary embodiment of the present disclosure.

First, the user terminal 100 may display the image contents (S1410). Here, the image contents, which are the same image contents as image contents which are currently displayed by the display device 200, may be received from the display device 200, and may be displayed to be synchronized with the image contents displayed by the display device 200.

In addition, the user terminal 100 determines whether or not a preset user interaction is detected (S1420).

If the preset user interaction is detected (Yes in S1420), the user terminal 100 displays an UI for selecting the specific section of the image contents (S1430). Here, the user terminal 100 may display an UI of a progress bar form mapped to a reproduction time of the image contents.

In addition, the user terminal 100 determines whether or not the specific section is selected through the UI (S1440).

If the specific section is selected (Yes in S1440), the user terminal 100 displays a list providing a plurality of services for the selected section (S1450). Here, the list may include at least one of a preview icon providing a preview service, a storage icon providing a storage service, a sharing icon providing a sharing service, and an edit icon providing an edit service.

In addition, the user terminal 100 determines whether or not one of the plurality of services is selected (S1460).

When one of the plurality of services is selected (Yes in S1460), the user terminal 100 provides a service selected for the specific section (S1470). Specifically, when a user interaction selecting the preview icon of a plurality of icons included in the list is detected, the user terminal 100 may reproduce the image contents of the specific section on one area of the display screen. In addition, when a user interaction selecting the storage icon of the plurality of icons included in the list is detected, the user terminal 100 may store the image contents of the specific section in the storage. In addition, when a user interaction selecting the sharing icon of the plurality of icons included in the list is detected, the user terminal 100 may upload the image contents of the specific section to the external server.

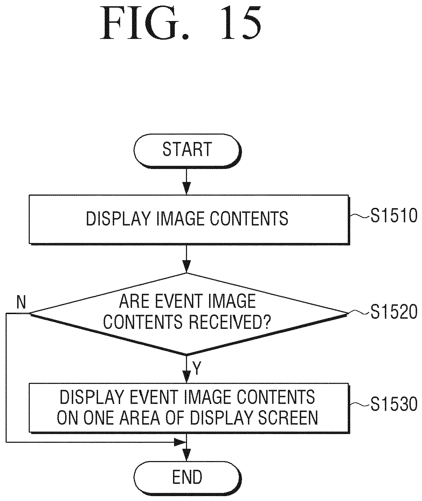

FIG. 15 is a flowchart illustrating an example simultaneously displaying event image contents and image contents according to an exemplary embodiment of the present disclosure.

First, the user terminal 100 displays the image contents (S1510). Here, the image contents, which are the same image contents as image contents which are currently displayed by the display device 200, may be received from the display device 200, and may be displayed to be synchronized with the image contents displayed by the display device 200.

In addition, the user terminal 100 determines whether or not event image contents are received (S1520). Here, the event image contents may be received from the display device 200, and may be one of reservation image contents reserved by a user, recommendation image contents recommended by a contents provider, and advertisement image contents.

In addition, the user terminal 100 displays the event image contents received from the outside on one area of the display screen (S1530). Here, the user terminal 100 may display the event image contents in a PIP form at a lower part of the display screen. In addition, when a preset user interaction for the event image contents is detected, the user terminal 100 may display the event image contents on the entire screen.

According to the diverse exemplary embodiments of the present disclosure as described above, the user may receive various services and functions for the image contents displayed by the display device through the user terminal 100 without being disturbed the viewing for the image displayed by the display device 200.

Meanwhile, the control method for the display device according to the diverse exemplary embodiments described above may be implemented in a program so as to be provided to the display device. Specifically, a non-transitory computer readable medium having a program including the control method for the display device stored thereon may be provided.

The non-transitory computer readable medium does not mean a medium storing data for a short period such as a register, a cash, a memory, or the like, but means a machine-readable medium semi-permanently storing the data. Specifically, various applications or programs described above may be stored and provided in the non-transitory computer readable medium such as a compact disc (CD), a digital versatile disk (DVD), a hard disk, a Blu-ray disk, a universal serial bus (USB), a memory card, a read-only memory (ROM), or the like.

Hereinabove, although the exemplary embodiments of the present disclosure have been shown and described, it should be understood that the present disclosure is not limited to the disclosed embodiments and may be variously changed by those skilled in the art without departing from the spirit and the scope of the present disclosure. Therefore, the present disclosure should be construed as including all the changes, equivalents, and substitutions included in the spirit and scope of the present disclosure.

## Claims

1. A control method for a user terminal, the control method comprising:
displaying multiple relevant images for one image contents;
when a preset user interaction is detected, displaying a first user interface (UI) for selecting a reproduction time point of the multiple relevant images ; and
when a user interaction selecting a specific time point through the first UI is detected, reproducing the multiple relevant images from the specific time point.

2. The control method as claimed in claim 1, further comprising receiving an image stream for the multiple relevant images from an external display device,
wherein in the displaying of the multiple relevant images, the image stream is processed to simultaneously display the multiple relevant images.

3. The control method as claimed in claim 2, wherein in the displaying of the multiple relevant images, the multiple relevant images synchronized with image contents displayed by the display device are displayed using timestamp information included in the image stream.

4. The control method as claimed in claim 2, further comprising storing the image stream received from the display device,
wherein in the reproducing of the multiple relevant images, the multiple relevant images are reproduced from the specific time point using the stored image stream.

5. The control method as claimed in claim 1, wherein the reproducing of the multiple relevant images includes:
transmitting information on the specific time point to an external server;
receiving the image stream for the multiple relevant images from the specific time point from the external server; and
reproducing the received multiple relevant images from the specific time point.

6. The control method as claimed in claim 1, further comprising:
when a preset user interaction for one of the multiple relevant images is detected, displaying a second UI for selecting a reproduction time point for one relevant image; and
when a user interaction selecting a specific time point through the second UI is detected, reproducing only one relevant image from the specific time point.

7. The control method as claimed in claim 6, further comprising when the preset user interaction for one relevant image is detected while one relevant image is reproduced from the specific time point, expanding one relevant image to be displayed on the entire screen.

8. The control method as claimed in claim 1, wherein the first UI is an UI of a progress bar form.

9. A user terminal, comprising:
a display configured to display multiple relevant images for one image contents;
a sensor configured to detect a user interaction; and
a controller configured to control the display so as to display a first user interface (UI) for selecting a reproduction time point of the multiple relevant images when a preset user interaction is detected through the sensor, and to reproduce the multiple relevant images from a specific time point when a user interaction selecting the specific time point through the first UI is detected.

10. The user terminal as claimed in claim 9, further comprising:
a communicator configured to receive an image stream for the multiple relevant images from an external display device; and
an image processor configured to process the received image stream,
wherein the controller controls the display so as to simultaneously display the multiple relevant images processed by the image processor.

11. The user terminal as claimed in claim 10, wherein the controller controls the display so as to display the multiple relevant images synchronized with image contents displayed by the display device using timestamp information included in the image stream.

12. The user terminal as claimed in claim 10, further comprising a storage configured to store the image stream received from the display device,
wherein the controller reproduces the multiple relevant images from the specific time point using the image stream stored in the storage.

13. The user terminal as claimed in claim 9, further comprising a communicator configured to perform communication with an external server,
wherein the controller controls the communicator so as to transmit information on the specific time point to the external server and receive an image stream for the multiple relevant images from the specific time point from the external server, and reproduces the received multiple relevant images from the specific time point.

14. The user terminal as claimed in claim 9, wherein the controller controls the display so as to display a second UI for selecting a reproduction time point of one relevant image when a preset user interaction for one of the multiple relevant images is detected through the sensor, and reproduces only one relevant image from the specific time point when a user interaction selecting the specific time point through the second UI is detected.

15. The user terminal as claimed in claim 14, wherein the controller controls the display so as to expand one relevant image to be displayed on the entire screen when the preset user interaction for one relevant image is detected through the sensor while one relevant image is reproduced from the specific time point.
